# EUROPEAN PATENT SPECIFICATION

(11) **EP 2 069 820 B1**
(45) Date of publication and mention of the grant of the patent: **02.11.2011**
(21) Application number: 07808578.4
(22) Date of filing: 14.09.2007
(51) Int. Cl.: G01S 13/76, H04B 1/16

(54) **METHOD AND TRANSMITTER-RECEIVER DEVICE FOR RECEIVING A FULL-DUPLEX SIGNAL**
VERFAHREN UND SENDER/EMPFÄNGER-EINRICHTUNG ZUM EMPFANGEN EINES VOLLDUPLEXSIGNALS
PROCÉDÉ ET DISPOSITIF ÉMETTEUR-RÉCEPTEUR POUR LA RÉCEPTION D'UN MESSAGE EN DUPLEX INTÉGRAL

(30) Priority: 15.09.2006 NL 1032507
(43) Date of publication of application: 17.06.2009
(73) Proprietor: N.V. Nederlandsche Apparatenfabriek NEDAP, 7141 DC Groenlo (NL)
(72) Inventor: STEKELENBURG, Jan Cornelis, 7101 CJ Winterswijk (NL)
(74) Representative: Hatzmann, Martin
(86) International application number: PCT/NL2007/050447
(87) International publication number: WO 2008/033022

(56) References cited:
- JP-A- 57 035 777
- KR-B1- 100 617 322
- US-A- 5 649 296
- US-A1- 2006 186 995
- KIM D ET AL: "MEASUREMENTS OF SMALL-SCALE FADING AND PATH LOSS FOR LONG RANGE RF TAGS" IEEE TRANSACTIONS ON ANTENNAS AND PROPAGATION, IEEE SERVICE CENTER, PISCATAWAY, NJ, US, vol. 51, no. 8, August 2003 (2003-08), pages 1740-1749, XP001169681 ISSN: 0018-926X

## Description

The invention relates to a method for receiving a full-duplex signal, according to the preamble of claim 1. The invention further relates to a transmitter-receiver device for receiving a full-duplex signal according to the preamble of claim 25. The invention also relates to a computer program product.

Such devices are known from US 2006/186995.

It is generally known to receive signals from responders with the aid of transmitter-receiver devices. Such transmitter-receiver devices generally comprise a transmitter for transmitting an interrogation field and a receiver for receiving a responder signal transmitted by a responder in response to the reception of the interrogation field by the responder.

In a known variant, the interrogation field is alternately switched on and off. Here, the responder can, for instance, receive the interrogation field when it is switched on and transmit a responder signal when the interrogation field is switched off. This principle, always involving one-way communication, is known as half-duplex. It is also possible for the responder to receive the interrogation field when it is switched on and to also transmit a responder signal when the interrogation field is switched on. This principle, involving two-way communication, is known as full-duplex. It will be clear that, with full-duplex, the interrogation field does not necessarily need to be switched on and off alternately.

Further, systems are known where both a full-duplex and a half-duplex responder signal are received by a receiver of a transmitter-receiver device. Here, for instance, the full-duplex responder signal is received when the interrogation field is switched on and the half-duplex responder signal is received when the interrogation field is switched off. An example of such a system is a transmitter-receiver device according to International Standards Organization (ISO) standards numbers 11784 and 11785, hereinafter referred to as ISO transmitter-receiver device.

It is known to receive a full-duplex signal, while, in a repeating switching cycle, an alternating interrogation field generated by a transmitter is provided, while, during a first period of each switching cycle, the interrogation field is switched on and, during a second period of each switching cycle, the interrogation field is switched off, while, in response to the interrogation field, the full-duplex signal is transmitted, for instance by a full-duplex responder placed in the interrogation field, and while a receiver carries out at least one signal receiving step, for receiving a signal to be received which contains the full-duplex signal, and optionally carries out at least one signal processing step, for processing the received full-duplex signal.

However, a drawback of the known method is that, if the interrogation field is alternately switched on and off, such as for instance with an ISO transmitter-receiver device, each time the interrogation field is switched on, the amplitude of the interrogation field will change from zero to a maximum value. The receiver, which receives both the interrogation field and the full-duplex signal, then detects an amplitude jump which is many times, for instance one hundred thousand times, larger than the variations in the amplitude as a result of the full-duplex signal. As a result, the receiver may become disordered, for some time. Because the receiver becomes disordered, it may take some time, for instance some tens of milliseconds, before settings of the receiver are again stabilized such that the receiver can receive the full-duplex signal. The becoming disordered may, for instance, be caused in that an amplifier of the receiver becomes overloaded (i.e. needs to process too large an input signal) due to the above-mentioned amplitude jump. Due to the receiver becoming disordered, for some time, the receiver is not able to receive the full-duplex signal, so that the reception is delayed, or possibly even becomes impossible in that the time remaining between stabilization of the receiver and again switching off the interrogation field is too short to receive the complete full-duplex signal. US 2006/186985 proposes to solve this problem by providing a large dynamic range in the receiver processing stages.

The invention contemplates providing an alternative solution for at least one of the above problems.

To this end, according to the invention, a method according to the characterizing portion of claim 1 is provided.

Thus, the at least one signal receiving step and/or signal processing step is only switched on after the waiting period after switching on of the interrogation field has elapsed, so that, during the waiting period, the disturbances of the interrogation field and/or the results thereof can, at least partly, damp in the receiver so that the at least one signal receiving step and/or signal processing step is confronted with no, or at least smaller, disturbances of the interrogation field and/or the results thereof in the receiver. The duration of the waiting period is less than the time lost by waiting until the signal receiving step and/or signal processing step is stabilized again if no waiting time is observed. Therefore, by observing the waiting time, it is possible carry out a stable signal receiving step and/or signal processing step sooner after switching on of the interrogation field than when the signal receiving step and/or signal processing step were started simultaneously with, or before, switching on of the interrogation field.

Preferably, the above-mentioned provision of the interrogation field comprises: providing an alternating interrogation field in a repeating switching cycle where, during a first period of each switching cycle, the interrogation field is switched on and, during a second period of each switching cycle, the interrogation field is switched off and where above-mentioned starting comprises: starting the at least one signal receiving step and/or signal processing step during the switching cycle after a waiting period elapsed from switching on of the interrogation field, and the method further comprises: stopping the at least one signal receiving step and/or signal processing step during the switching cycle. Thus, it is possible to provide the alternating interrogation field, which is, for instance, suitable for receiving full-duplex and half-duplex signals, while, during the switching cycle, the at least one signal receiving step and/or signal processing step is only switched on after the waiting period after switching on of the interrogation field has elapsed, so that, during the waiting period, the disturbances of the interrogation field and/or the results thereof can, at least partly, damp in the receiver so that the at least one signal receiving step and/or signal processing step is confronted with no, at least smaller, disturbances of the interrogation field and/or the results thereof in the receiver.

Preferably, the duration of the waiting period is chosen such that disordering of the at least one signal receiving step and/or signal processing step by switching on of the interrogation field is prevented.

It is possible that the duration of the waiting period is predetermined. The duration may, for instance, have a predetermined constant value. This offers the advantage that the waiting period can be implemented in the hardware and/or control of the receiver in a simple manner.

It is also possible that the duration of the waiting period is at least as long as the duration of a reference period in which or after which a property of the received signal meets a predetermined criterion. This offers the possibility that the duration of the waiting period is related to a criterion of the received signal, for instance a degree of distortion or a magnitude of a disturbance of the signal. Here, the duration of the waiting period may be predetermined or be determined during operation of the receiver, for instance during each switching cycle, on the basis of the criterion.

In one embodiment, the waiting period is substantially at least as long as a damping period in which a response to switching on of the interrogation field damps in a first part of the receiver which is upstream in the signal processing direction of a second part of the receiver in which the at least one signal receiving step and/or signal processing step is carried out.

Preferably, the receiver is connectable with an antenna for receiving electromagnetic radiation, for instance magnetic radiation, which comprises the transmitted full-duplex signal, and where the at least one signal receiving step comprises communicatively connecting the receiver with the antenna. Preferably, the at least one signal processing step comprises filtering the full-duplex signal from the received signal, and/or amplifying the received full-duplex signal by a predetermined amplification factor, and/or amplifying the full-duplex signal by an, optionally automatically controlled variable amplification factor. This is because these steps cause the risk that detecting the signal to be received, filtering the full-duplex signal and/or amplifying the full-duplex signal, respectively, will become disordered if these steps are started simultaneously with, or before, switching on of the interrogation field. Therefore, these steps are advantageously carried out only after the waiting period has been observed after switching on of the interrogation field.

Preferably, the method comprises successively in time switching on parts of the receiver located downstream of one another in the signal processing direction. This offers the advantage that disordering of a part of the receiver by starting a part of the receiver located upstream of that part in the signal processing direction is prevented. This is because, if the upstream part of the receiver is disordered by switching on of the interrogation field, the disordering could propagate through the receiver to a part of the receiver located downstream of the disordered part, which could then also be disordered by, at least the results of, switching on of the interrogation field. This can now be prevented by successively in time switching on parts of the receiver located downstream of one another in the signal processing direction.

Preferably, transmitting the full-duplex signal comprises modulating the interrogation field with the full-duplex signal.

Preferably, the method further comprises measuring a maximum amplitude of the interrogation field each time after switching on the transmitter, and/or setting at least one component of the receiver at a predetermined value before a signal is supplied to the receiver, and/or, after a first waiting period, connecting the detector with the antenna for receiving the signal to be received, and/or, after a second waiting period, filtering the received full-duplex signal from the received signal, and/or, after a third waiting period, amplifying the received full-duplex signal, by a predetermined amplification factor, and/or, after a fourth waiting period, amplifying the received full-duplex signal by an automatically controlled variable amplification factor to compensate for variations in a signal strength of the full-duplex signal. This efficiently allows minimizing a time interval between switching on of the interrogation field and being able to receive the received full-duplex signal. In a special variant, all four waiting periods are observed.

Preferably, the fourth waiting period is longer than the third waiting period, the third waiting period is longer than the second waiting period and the second waiting period is longer than the first waiting period, counting from switching on of the interrogation field. This offers the advantage that disordering of each next signal receiving step and/or signal processing step by starting each previous signal receiving step and/or signal processing step is also prevented. This is because, if the previous signal receiving step and/or signal processing step is disordered by switching on of the interrogation field, the disordering can propagate through the receiver to the next signal receiving step and/or signal processing step which could then also be disordered by, at least the results of, switching on of the interrogation field.

In the following, the invention will be explained in more detail with reference to the drawing, in which:
Fig. 1 shows a first schematic representation of an embodiment of a transmitter-receiver device according to the invention; and
Fig. 2 shows a second schematic representation of an embodiment of a transmitter-receiver device 1 according to the invention.

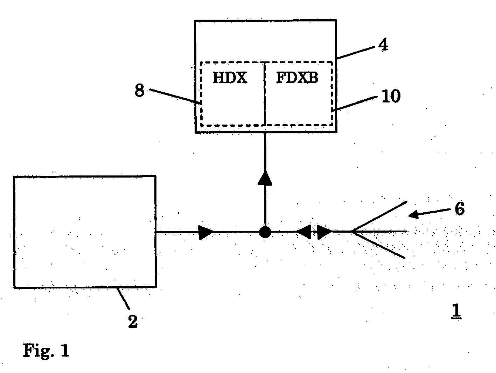

Fig. 1 shows a first schematic representation of an embodiment of a transmitter-receiver device 1 according to the invention. The transmitter-receiver device 1 in Fig. 1 is designed as an ISO transmitter-receiver device. An ISO transmitter-receiver device is understood to mean a transmitter-receiver device for receiving half-duplex (HDX) and full-duplex (FDXB) signals as laid down in the international standards ISO 11784 and 11785.

The ISO transmitter-receiver device in Fig. 1 is arranged for the identification of ISO responders. The transmitter-receiver device 1 comprises a transmitter 2, a receiver 4 and an antenna 6 connectable with the transmitter 2 and the receiver 4. The transmitter 2 is arranged for generating an electromagnetic interrogation field, for instance a magnetic interrogation field. The receiver 4 is arranged for receiving a half-duplex and/or full-duplex signal to be received. The receiver receives the half-duplex and/or full duplex signal from the antenna 6, which converts the magnetic information from the responder into an electrical signal. With the ISO transmitter receiver device shown in Fig. 1, the receiver 4 comprises a half-duplex receiver 8 and a full-duplex receiver 10.

With the ISO transmitter-receiver device 1, a transmitter 2 is alternately switched on and switched off in a repeating switching cycle. It therefore holds that the interrogation field is switched on during a first period of each switching cycle and is switched off during a second period of each switching cycle. During the first period, in which the interrogation field is transmitted, both a full-duplex and a half-duplex responder can be supplied with sufficient energy for being able to transmit a full-duplex or half-duplex signal, respectively, if they are located within a predetermined distance to the antenna 6 in the interrogation field.

During the second period in which the interrogation field is switched off, a half-duplex responder located in the proximity of the transmitter-receiver device I can transmit a half-duplex signal. This half-duplex signal is received by the antenna 6 and supplied to the receiver 4. The half-duplex receiver 8 of the receiver 4 detects the half-duplex signal.

The first period and the second period may have any duration suitable for the specific application. For instance, the first period may have a duration of more than 10 milliseconds, such as minimally 50 milliseconds. The second period may, for instance, be longer than or as long as 3 milliseconds and/or shorter than or as long as 20 milliseconds. A suitable value for the second period is, for instance, 3 milliseconds or 20 milliseconds. For an ISO transmitter-receiver device, for instance, a suitable value of the first period is at least 30 milliseconds and maximally 100 ms with a second period of 3 milliseconds or 20 milliseconds.

During the first period, during the transmission of the interrogation field, the full-duplex signal is transmitted by the full-duplex responder. This transmission takes place in that, in this example, the full-duplex responder modulates the interrogation field. The full-duplex responder modulates the interrogation field with the full-duplex signal, while the full-duplex responder damps or does not damp the interrogation field to the rhythm of the full-duplex signal. In the full-duplex receiver 8 of the receiver 4, the full-duplex signal is detected as a small amplitude variation of the interrogation field. With an increasing distance between transmitter-receiver device 1 and full-duplex responder, this amplitude variation becomes increasingly smaller. With large distances, this modulation becomes difficult to distinguish from noise which arises in the transmitter or which is received from other sources from the environment.

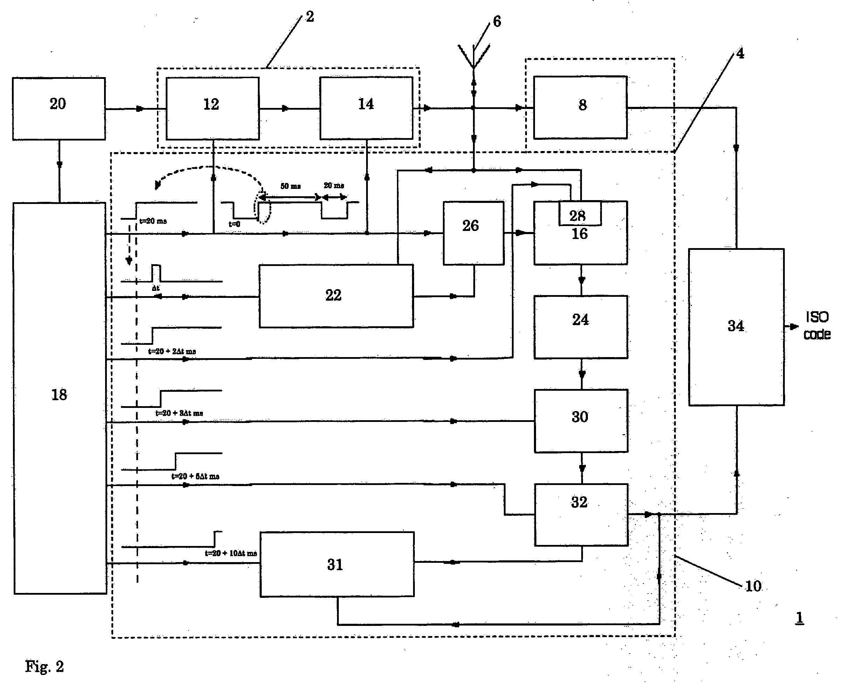

Fig. 2 shows a second schematic representation of an embodiment of a transmitter-receiver device 1 according to the invention. This example involves an ISO transmitter-receiver device 1 in which the interrogation field is alternately switched on and off. To this end, the transmitter 2 is provided with a signal generator 12 and a regulating device 14. In this example, the regulating device 14 is arranged for, alternately, admitting a transmitter signal generated by the signal generator 12 during the first period and damping the transmitter signal in the antenna during the second period.

To this end, in this example, the regulating device 14 is provided with a damping circuit for damping the antenna, so that, after switching off the interrogation field, transmitter energy present in the antenna can be removed from the antenna.

The transmitter 2 is connected with the antenna 6, which transmits the transmitter signal received from the transmitter 2 as the interrogation field. Each time the interrogation field is switched on, an amplitude of the interrogation field changes from zero to a maximum value.

In Fig. 2, the transmitter-receiver device 1 is further provided with control means 18. In this example, the control means 18 are *inter alia* connected with the signal generator 12 and the regulating device 14. In this example, the control means 18 and the signal generator are synchronized by means of a common reference clock 20, for instance a crystal reference.

The transmitter-receiver device shown in Fig. 2 operates as follows.

The control device 18 generates a first signal for controlling the transmitter 2 with the regulating device 14 so that alternately the interrogation field is transmitted during the first period and no interrogation field is transmitted during the second period. During the first period, by the antenna 6, a signal is received which contains the full-duplex signal, for instance transmitted by a full-duplex responder, and, during the second period, for instance a signal is received which contains the half-duplex signal, for instance transmitted by a half-duplex responder, as described in relation to Fig. 1. In the receiver 4, the half-duplex signal is supplied to the half-duplex receiver 8 and the full-duplex signal is supplied to the full-duplex receiver 10.

The full-duplex signal comprises a small amplitude variation of the interrogation field. In order to separate the small amplitude variation from the interrogation field, the full-duplex receiver 10 is, in this example, provided with a filter 16. The amplitude variation may, for instance, be demodulated by means of top detection or synchronous demodulation. After this demodulation, a carrier wave, here the interrogation field is represented by a DC voltage and the full-duplex signal is represented by an AC voltage. The DC voltage, which may be up to one hundred thousand times larger than the AC voltage representing the full-duplex signal, may for instance be filtered out with the aid of a coupling capacitor. In this example, the filter 16 therefore comprises at least one coupling capacitor.

During the switching on of the interrogation field, the full-duplex receiver 10 is disconnected from the antenna 6. To this end, in this example, switching device 28 is included in the filter 16. During the switching on of the interrogation field, the switching device 28 is switched off, which means that the switching device 28 is set in an interrupting mode in which the received signal cannot propagate through the filter 16.

In this example, the transmitter-receiver device is further provided with amplitude determining means 22. The amplitude determining means 22 are connected with the control means 18. During a rise time which starts when the interrogation field is switched on, an amplitude of the transmitter signal, and accordingly of the interrogation field, rises to a maximum value. The amplitude determining means 22 determine the amplitude of the transmitter signal and pass it on to the control device 18. As soon as the maximum value has been reached, the control device 18 generates a second signal which is supplied to the amplitude determining means 22. In response to the reception of the second signal, the amplitude determining means 22 determine the maximum amplitude of the transmitter signal. In this example, the determined maximum amplitude is stored in a memory.

In this example, during the determination of the amplitude of the transmitter signal, a component of the filter 16 of the full-duplex receiver 10 is set at a predetermined value by setting means 26. In this example, the predetermined value is determined on the basis of the measured maximum amplitude of the transmitter signal. Thus, for instance, after demodulation, a predetermined value of a DC voltage level of the filter 16 can be equated with a DC voltage level corresponding with the maximum measured amplitude of the transmitter signal. In a special embodiment, the predetermined value of the component of the filter 16 is equated with a value corresponding with a maximum amplitude of the transmitter signal determined during the preceding first period. The DC voltage level of the filter 16 may, for instance, be set at the predetermined DC voltage level which corresponds with the maximum amplitude of the transmitter signal determined during the preceding first period. This offers the advantage that the predetermined value can be set during the determination of the maximum amplitude instead of after the determination of the maximum amplitude, so that the predetermined value is set sooner and the full-duplex receiver 10 can sooner be connected with the antenna 6. As a result, the full-duplex receiver is sooner ready for receiving the full-duplex signal. It will be clear that, in the latter case, the predetermined value can also already be set before the interrogation field is switched on, i.e. before the first period starts. It will further be clear that it generally holds that the predetermined value may also have a predetermined fixed value.

In this example, the predetermined value of the component of the filter of the full-duplex receiver 19 is set. More generally, it holds that a predetermined value of a component of the full-duplex receiver is set.

In this example, after the predetermined value of the component of the filter 16 of the receiver 4 has been set, and after a first waiting period has been observed from the moment of switching on of the interrogation field, a third signal is generated by the control device.

A duration of the first waiting period may be predetermined, and may be chosen such that the duration of the first waiting period is sufficiently long to comprise the rise time, the determination of the maximum amplitude and the setting of the predetermined value of the component of the filter 16. Here, the duration of the first waiting period may, for instance, have predetermined constant value. It is possible for the duration of the first waiting period to be at least as long as the duration of a reference period in which or after which a property of the received signal meets a predetermined criterion in the code filter 16. The duration of the first waiting period may, for instance, be related to a degree of distortion or a magnitude of (a disturbance of) the signal in the code filter. Here, the duration of the first waiting period is, for instance, as long as the duration of a reference period in which or after which a degree of distortion or a magnitude of (a disturbance of) the signal in the code filter decreases to below-a-predetermined value. Here, the duration of the first waiting period may be predetermined or may be determined on the basis of the criterion during operation of the receiver, for instance during each switching cycle.

The third signal is supplied to the switching device 28. In response to the reception of the third signal, the switching device 28 is switched on, i.e. set in a connecting mode in which the received signal can propagate through the filter 16 to a detector 24 in which the received signal is detected. Since, in this example, the DC voltage level of the filter 16 has already been set on the basis of the measured maximum amplitude of the transmitter signal, a DC voltage level corresponding with the amplitude of the received signal will substantially correspond with the set predetermined DC voltage level.

Since the received signal has a large amplitude in proportion to the full-duplex signal, when the switching device 28 is brought into the connecting mode, a small difference may be present between the set predetermined DC voltage level and a received DC voltage level corresponding with the actually received amplitude, so that the filter 16 and/or the detector 24 may still need to process an amplitude jump.

In order to prevent the amplitude jump for propagating through the full-duplex receiver 10, waiting takes place during a second waiting period before switching on a part of the receiver 10 located downstream of the switching device 28 in a signal processing direction. A duration of the second waiting period may be predetermined, and be chosen such that the duration of the second waiting period is sufficiently long to let above-mentioned amplitude jump be extinguished virtually completely, i.e. sufficiently long not to disorder the part of the full-duplex receiver 10 located downstream of the switching device 28. In this example, the second waiting period is longer than the first waiting period, counting from switching on of the interrogation field.

After the second waiting period has elapsed, in this example, a fourth signal is generated by the control device 18. The fourth signal is supplied to a code filter 30. In response to the reception of the fourth signal, the code filter 30 is switched on. The code filter 30 is arranged for filtering the received full-duplex signal from the received signal. The code filter 30 may be provided with an amplifier for amplifying the received signal and/or the received full-duplex signal.

Switching on the code filter 30 may also cause a disturbance in an output signal of the code filter 30. In order to prevent the disturbance from propagating through the full-duplex receiver 10, waiting takes place during a third waiting period before switching on a part of the receiver 10 located downstream of the code filter 30 in a signal processing direction of the full-duplex receiver 10. A duration of the third waiting period may be predetermined, and be chosen such that the duration of the third waiting period is sufficiently long to let above-mentioned disturbance be extinguished virtually completely, i.e. sufficiently long not to disorder the part of the full-duplex receiver 10 located downstream of the code filter 30. In this example, the third waiting period is longer than the second waiting period, counting from switching on of the interrogation field.

After the third waiting period has elapsed, in this example, a fifth signal is generated by the control device 18. The fifth signal is supplied to an amplifier 32. In response to the reception of the fifth signal, the amplifier 32 is switched on.

The amplifier 32 amplifies the received full-duplex signal by a predetermined amplification factor. The predetermined amplification factor is, for instance, chosen to be equal to an amplification factor which was set during the preceding first period. As a result, an amplitude of the amplified received full-duplex signal is substantially directly suitable to be supplied to a code detector 34.

In this example, the amplifier 32 is designed as an amplifier with an automatic amplification-factor control 31 (AGC control). In this example, the automatic amplification factor control 31 is switched off, however, during the switching on of the amplifier 32, and the amplifier 32 is switched on with the predetermined amplification factor.

In this example, a fourth waiting period is observed before a sixth signal is generated by the control device 18. The sixth signal is supplied to the automatic amplification factor control 31 of the amplifier 32. In response to the reception of the sixth signal the automatic amplification factor control 31 of the amplifier 32 is switched on for adjusting variations in signal strength of the received full-duplex signal. In this example, the fourth waiting period is longer than the third waiting period, counting from switching on of the interrogation field. It will be clear that the amplifier 32 can also already amplify the received full-duplex signal and supply it to the code detector 34 before the automatic amplification factor control 31 has been switched on.

More generally, it therefore holds that the receiver 4 comprises at least one sub device, such as the switching device 28, the code filter 30, the amplifier 32 or the automatic amplification factor control 31, which each carry out a signal receiving step and/or signal processing step for receiving the signal to be received and/or processing the received signal, respectively, Here, the receiver 4 is further provided with control means 18 which, during each switching cycle, wait to switch on the at least one sub device during a waiting period after switching on of the interrogation field and switch off the at least one sub device during each switching cycle.

In this example, the waiting periods are discretely digitally generated. Thus, the first, second, third and fourth waiting periods are each a whole number of times a predetermined time interval Δt. In this example, the first waiting period is 2Δt, the second waiting period is 3At, the third waiting period is 5Δt and the fourth waiting period is 10Δt, counting from the moment of switching on of the interrogation field. The sub devices associated with the respective waiting periods are, in this example, designed such that, of each sub device, a response time (the time in which a disturbance in the respective sub device is virtually completely extinguished) is optimally adjusted to the waiting period associated with that sub device. In a special favorable embodiment, the predetermined time interval Δt is 0.1 to 5 ms, preferably 0.4-1.5 ms, more preferably substantially 0.6 ms.

During a second period, when the interrogation field is switched off, the half-duplex receiver 8 receives the half-duplex signal, for instance transmitted by the half-duplex responder. The received half-duplex signal is supplied to the code detector 34. From the received half-duplex signal and/or full-duplex signal, the code detector 34 determines an ISO code associated with the respective responder.

After the transmitter-receiver device has gone through a switching cycle comprising the first and the second period this switching cycle can be repeated.

By observing the waiting period(s), in this example it is achieved that no part of the receiver circuit is disordered by the switching on of the interrogation field and/or by switching-on phenomena of a part of the receiver circuit located upstream. As a result, within a short time after switching on of the interrogation field, for instance within a few milliseconds, detection of the full-duplex signal can start, even if the full-duplex signal is many times, for instance some hundreds of thousands to more than a million times, weaker than the interrogation field generated by the transmitter-receiver device. Because the receiver starts detecting the full-duplex signal soon after switching on of the interrogation field, the complete full-duplex signal, which normally takes up 30.5 ms, can be observed within the available 50 ms in which the interrogation field is switched on.

It will be clear that the waiting periods may each have their own predetermined duration However, it is also possible that the duration of a waiting period, which is observed before switching on a part of the receiver circuit, is determined on the basis of an intensity of a disturbance at an output of the part of the amplifier circuit located upstream of that part. Here, for instance, the waiting period can be ended when the intensity of the disturbance decreases to below a predetermined threshold value. It is thus possible to determine the duration of the waiting period during the damping of the disturbance. Starting the signal receiving step and/or signal processing step if a property of the received signal meets a predetermined criterion.

It is noted that the units and elements of a system or device according to the invention may be implemented in hardware and/or in software. Here, parts which are functionally different may be physically integrated, for instance in a central processing unit. For instance, in the example of Fig. 2, the filter 16, the detector 24, the code filter 40 and the amplifier 32 may be designed as a single unit, for instance as a single integrated circuit or by means of a single PC board on which the filter 16, the detector 24, the code filter 30 and the amplifier 32 are mounted and are interconnected in a suitable manner for signal transmission. It is also possible that parts which can carry out a particular function are designed so as to be physically distributed. For instance, the control means 18 may comprise separate clock circuits for determining the elapsed time of the respective waiting period.

The invention may also be designed as a computer program product, comprising program code loadable into a memory of a programmable device, for carrying out the steps of a method according to the invention when the computer program product is run on the programmable device. Such a computer program product may be designed as a data carrier provided with data representing instructions loadable into the memory and for instance a hard disc, a flash memory, a signal carrier (such as a telecommunication connection) or another suitable physical article. The computer program product may also comprise an Application Specific Integrated Circuit (ASIC) or other hardware which is constructed for running the program code.

Further, the invention may be designed as a kit for assembling a transmitter-receiver device which contains parts for this, where two or more of the parts are present in non-connected condition, and where the non-connected parts are connectable, for instance by connecting signal inputs and outputs, such that a transmitter-receiver device can be obtained. For instance, such a kit may comprise a separate antenna and a suitable electronic circuit which are interconnectable. Of course, the kit may also be designed in a different manner.

It is noted that the above examples are only intended by way of illustration. It will be clear that variations and modifications are possible and that the invention is not limited to the examples shown. For instance, it has been described hereinabove that, in the examples, the first, second, third and fourth waiting periods are observed for connecting the full-duplex receiver with the antenna, switching on the code filter, switching on the amplifier and switching on the automatic amplification factor control of the amplifier, respectively, while the fourth waiting period is longer than the third waiting period, the third waiting period is longer than the second waiting period, and the second waiting period is longer than the first waiting period, counting from switching on of the interrogation field. It will be clear that it is also possible that not all waiting periods have different durations. As an example, it is mentioned that the fourth waiting period is as long as the third waiting period, the third waiting period is as long as the second waiting period and/or the second waiting period is as long as the first waiting period, counting from switching on of the interrogation field. It will be clear that it is also possible that a fifth or further waiting period is observed for switching on a further sub device of the receiver.

Other variants, modifications or adjustments are of course also possible and are all understood to fall within the framework of the invention.

## Claims

1. A method for receiving a full-duplex signal, comprising:
- providing an interrogation field generated by a transmitter (2),
- transmitting the full-duplex signal in response to the interrogation field, for instance by a full-duplex responder placed in the interrogation fiend,
- wherein a receiver (4) carries out at least one signal receiving step, for receiving a signal to be received which contains the full-duplex signal, and optionally carries out at least one signal processing step, for processing the received signal, **characterized by**
- starting the at least one signal receiving step and/or signal processing step after a waiting period elapsed from switching on of the interrogation field.

2. A method according to claim 1, wherein said providing of the interrogation field comprises:
providing an alternating interrogation field in a repeating switching cycle, wherein, during a first period of each switching cycle, the interrogation field is switched on and, during a second period of each switching cycle, the interrogation field is switched off and
wherein said starting comprises:
starting the at least one signal receiving step and/or signal processing step during the switching cycle after a waiting period elapsed from switching on of the interrogation field, and
the method further comprising:
- stopping the at least one signal receiving step and/or signal processing step during the switching cycle.

3. A method according to any one of the preceding claims, wherein the duration of the waiting period is chosen such that disordering of the at least one signal receiving step and/or signal processing step by switching on of the interrogation field is prevented.

4. A method according to any one of the preceding claims, wherein the duration of the waiting period is predetermined.

5. A method according to any one of the preceding claims, wherein the duration of the waiting period is at least as long as the duration of a reference period in which or after which a property of the received signal meets a predetermined criterion.

6. A method according to any one of the preceding claims, wherein the waiting period is substantially at least as long as a damping period in which a response to switching on of the interrogation field damps in a first part (28,30,31,32) of the receiver (4) which is upstream in the signal processing direction of a second part of the receiver in which the at least one signal receiving step and/or signal processing step is carried out.

7. A method according to any one of the preceding claims, wherein the receiver (4) is connectable with an antenna (6) for receiving electromagnetic radiation which comprises the transmitted full-duplex signal, and wherein the signal receiving step comprises
- communicatively connecting the receiver (4) with the antenna (6).

8. A method according to any one of the preceding claims, wherein the signal processing step comprises
- filtering the received full-duplex signal from the received signal,
- amplifying the received full-duplex signal by a predetermined amplification factor, and/or
- amplifying the received full-duplex signal by a variable amplification factor.

9. A method according to claim 8, comprising amplifying the received full-duplex signal by an automatically controlled variable amplification factor.

10. A method according to any one of the preceding claims, comprising
- successively in time switching on parts of the receiver located downstream of one another in the signal processing direction.

11. A method according to any one of the preceding claims, wherein the transmission of the full-duplex signal comprises modulating the interrogation field with the full-duplex signal.

12. A method according to any one of the preceding claims, wherein the method comprises, each time after switching on of the interrogation field:
- measuring a maximum amplitude of the interrogation field, and/or
- before a signal is supplied to the receiver (4), setting at least one component of the receiver (4) at a predetermined value, and/or
- after a first waiting period, connecting a detector for detecting a full-duplex code in the received signal with the antenna for receiving the signal to be received, and/or
- after a second waiting period, filtering the received full-duplex signal from the received signal, and/or
- after a third waiting period, amplifying the received full-duplex signal by a predetermined amplification factor, and/or
- after a fourth waiting period, amplifying the received full-duplex signal by an automatically controlled variable amplification factor to compensate for variations in a signal strength of the received full-duplex signal.

13. A method according to claim 12, wherein the fourth waiting period is longer than the third waiting period, the third waiting period is longer than the second waiting period and the second waiting period is longer than the first waiting period, counting from switching on of the interrogation field.

14. A method according to claim 12 or 13, wherein the predetermined value is determined on the basis of the measured maximum amplitude of the interrogation field.

15. A method according to claims 2 and 14, wherein the predetermined value is determined on the basis of the measured maximum amplitude of the interrogation field during the preceding first period.

16. A method according to claims 2 and 9, wherein the predetermined amplification factor is determined on the basis of a value of the automatically controlled variable amplification factor during the preceding first period.

17. A method according to at least claim 2, wherein the first period has a duration of substantially 50 ms.

18. A method according to at least claim 2, wherein the second period has a duration of substantially 3 or 20 me.

19. A method according to claim 12 or 13, wherein the first, second, third and fourth waiting period are each a whole number of times a predetermined time interval.

20. A method according to claim 19, wherein the first waiting period is two times the predetermined time interval, the second waiting periods is three times the predetermined time interval, the third waiting period is five times the predetermined time interval, and the fourth waiting period is ten times the predetermined time interval, counting from the moment of switching on of the interrogation field.

21. A method according to any one of the preceding claims, wherein the method further comprises
- receiving a half-duplex signal, from, for instance, a half-duplex responder, for instance during the second period.

22. A method according to claim 21, wherein the method further comprises
- combining data with respect to the received half-duplex signal and data with respect to the received full-duplex signal.

23. A method according to any one of the preceding claims, wherein the method further comprises
- determining an ISO code on the basis of the received half-duplex signal and/or the received full-duplex signal.

24. A method according to at least claim 2, for receiving a full-duplex signal with the aid of a transmitter-receiver device (1), wherein the transmitter-receiver comprises a transmitter (2), a receiver (4) and an antenna (6) connectable with the transmitter (2) and the receiver (4), wherein the receiver is provided with a detector (24) for detecting a signal to be received, wherein the method comprises
- modulating the interrogation field with the full-duplex signal, for instance by a full-duplex responder placed in the interrogation field,
wherein the method further comprises, each time after switching on of the interrogation field,
- determining a maximum amplitude of the modulated interrogation field,
- setting at least one component of the receiver (4) at a predetermined value,
successively
- after a first waiting period, connecting the detector (24) with the antenna for receiving the signal to be received,
- after a second waiting period, switching on a code filter (30) for filtering the received full-duplex signal from the received signal,
- after a third waiting period, switching on an amplifier (32) of the receiver, for amplifying the received fuh-duplex signal by a predetermined amplification factor, and
- after a fourth waiting period, switching on an automatic amplification factor control (31) for controlling a variable amplification factor of the amplifier to compensate for variations in a signal strength of the received full-duplex signal, and after this,
- disconnecting the detector (24) from the antenna (10), switching off the code filter (32), switching off the amplifier (32) and switching off the automatic amplification factor control (31) of the amplifier during the first and/or the second period.

25. A transmitter-receiver device (1) for receiving a full-duplex signal, comprising a transmitter (2) and a receiver (4),
wherein the transmitter (2) generates an interrogation field,
wherein the receiver (4) is arranged for receiving a signal to be received which contains the full-duplex signal, for instance transmitted by a full-duplex responder placed in the interrogation field in response to the reception of the interrogation field,
wherein the receiver (4) comprises at least one sub device for receiving the signal to be received and/or processing the received signal, **characterized in that** the receiver (4) is further provided with control means which wait to switch on the at least one sub device during a waiting period after switching on of the interrogation field.

26. A transmitter-receiver device according to claim 25, wherein the transmitter (2) is provided with a regulating device (14) which operatively switches on and switches off an interrogation field generated by the transmitter (2) in a repeating switching cycle, wherein the transmitter, if switched on, generates the interrogation field and wherein the control means (18) are arranged for, during the switching cycle, after switching on of the interrogation field, during a waiting period, waiting to switch on the at least one sub device and switching off the at least one sub device during the switching cycle.

27. A transmitter-receiver device according to claim 25 or 26, wherein the receiving device comprises:
a detector (24) for detecting a full-duplex code in the received signal and
an antenna (6) connectable with the detector (24) for receiving electromagnetic radiation which comprises the transmitted full-duplex signal and wherein the at least one sub device (28,30,32,32) comprises a switching device (28) for alternately connecting and disconnecting the detector (24) and the antenna (6).

28. A transmitter-receiver device according to any one of claims 25-27, wherein the at least one sub device comprises a code filter (30) for filtering the full-duplex signal from the received signal.

29. A transmitter-receiver device according to any one of claims 25-28, wherein the at least one sub device comprises an amplifier (32), for amplifying the received full-duplex signal.

30. A transmitter-receiver device according to claim 29, wherein the at least one sub device (28,30,31,32) comprises an automatic amplification factor control (31) for controlling a variable amplification factor of the ampliffier (32).

31. A transmitter-receiver device according to any one of claims 25-30, wherein the receiver (4) is provided with amplitude determining means (22) for determining a maximum amplitude of the signal to be received.

32. A transmitter-receiver device according to any one of claims 25-31, wherein the receiver (4) is provided with setting means (26) for setting a component of the receiver at a predetermined value.

33. A transmitter-receiver device according to at least claim 26,
wherein the control means (18) are arranged for, each time after switching on of the interrogation field
- reading out the amplitude determining means (22) for determining the maximum amplitude of the signal to be received,
- controlling the setting means (26) for setting a component of the receiver (4) at the predetermined value, and successively
- after a first waiting period, controlling the switching device (28) for connecting the detector (14) with the antenna (6),
- after a second waiting period, switching on the code filter for filtering the full-duplex signal from the received signal,
- after a third waiting period, switching on the amplifier (32) of the receiver (4) for amplifying the received full-duplex signal by a predetermined amplification factor,
- after a fourth waiting period, switching on the automatic amplification factor control (31) for controlling the variable amplification factor of the amplifier (2) to compensate for variations in a signal strength of the received full-duplex signal,
wherein the receiver (4) is further arranged for, during each first and/or second period, controlling the switching device (28) for disconnecting the detector (24) from the antenna (16) and switching off the code filter (30), the amplifier (2) and the automatic amplification factor control (31).

34. A system for receiving full-duplex signals, comprising a transmitter-receiver device (1) according to any one of claims 25-33 and at least one full-duplex responder.

35. A computer program product, loadable into the memory of a digital computer, comprising software code parts for carrying out the steps of the method according to any one of claims 1-24.

## Patentansprüche

1. Verfahren zum Empfangen eines Vollduplexsignals, mit folgenden Schritten:
- Bereitstellen eines Abfragefelds, das von einem Sender (2) erzeugt wird,
- Senden des Vollduplexsignals als Antwort auf das Abfragefeld, z.B. mittels eines in dem Abfragefeld platzierten Vollduplex-Responders,
- wobei ein Empfänger (4) mindestens einen Signalempfangsschritt durchführt, um ein zu empfangendes Signal zu empfangen, welches das Vollduplexsignal enthält, und optional mindestens einen Signalverarbeitungsschritt durchführt, um das empfangene Signal zu verarbeiten, **gekennzeichnet durch**:
- Starten des mindestens einen Signalempfangsschritts und/oder Signalverarbeitungsschritts nach dem Ablauf einer mit dem Einschalten des Abfragefelds beginnenden Warteperiode.

2. Verfahren nach Anspruch 1, dem das Bereitstellen des Abfragefelds umfasst:
Bereitstellen eines alternierenden Abfragefelds in einem repetierenden Schaltzyklus, wobei während einer ersten Periode jedes Schaltzyklus das Abfragefeld eingeschaltet wird und während einer zweiten Periode jedes Schaltzyklus das Abfragefeld ausgeschaltet wird, und
wobei das Starten umfasst:
Starten des mindestens einen Signalempfangsschritts und/oder Signalverarbeitungsschritts während des Schaltzyklus nach dem Ablauf einer mit dem Einschalten des Abfragefelds beginnenden Warteperiode, und
das Verfahren ferner umfasst:
- Stoppen des mindestens einen Signalempfangsschritts und/oder Signalverarbeitungsschritts während des Schaltzyklus.

3. Verfahren nach einem der vorhergehenden Ansprüche, bei dem die Dauer der Warteperiode derart gewählt wird, dass eine Störung des mindestens einen Signalempfangsschritts und/oder Signalverarbeitungsschritts durch Einschalten des Abfragefelds verhindert wird.

4. Verfahren nach einem der vorhergehenden Ansprüche, bei dem die Dauer der Warteperiode vorbestimmt ist.

5. Verfahren nach einem der vorhergehenden Ansprüche, bei dem die Dauer der Warteperiode mindestens so lange ist wie die Dauer einer Referenzperiode, in oder nach der eine Eigenschaft des Empfangssignals ein vorbestimmtes Kriterium erfüllt.

6. Verfahren nach einem der vorhergehenden Ansprüche, bei dem die Warteperiode im Wesentlichen mindestens so lange ist wie eine Dämpfungsperiode, in der eine Antwort auf das Einschalten des Abfragefelds eine Dämpfung in einem ersten Teil (28,30,31,32) des Empfängers (4) durchführt, der in der Signalverarbeitungsrichtung stromaufwärts eines zweiten Teils des Empfängers angeordnet ist, in dem der mindestens eine Signalempfangsschritt und/oder Signalverarbeitungsschritt durchgeführt wird.

7. Verfahren nach einem der vorhergehenden Ansprüche, bei dem der Empfänger (4) mit einer Antenne (6) zum Empfang elektromagnetischer Strahlung, die das empfangene Vollduplexsignal aufweist, verbunden ist, und bei dem der Signalverarbeitungsschritt umfasst:
- kommunikatives Verbinden des Empfängers (4) mit der Antenne (6).

8. Verfahren nach einem der vorhergehenden Ansprüche, bei dem der Signalverarbeitungsschritt umfasst:
- Herausfiltern des empfangenen Vollduplexsignals aus dem Empfangssignal,
- Verstärken des empfangenen Vollduplexsignals mit einem vorbestimmten Verstärkungsfaktor, und/oder
- Verstärken des empfangenen Vollduplexsignals mit einem variablen Verstärkungsfaktor.

9. Verfahren nach Anspruch 8, mit dem Verstärken des empfangenen Vollduplexsignals mit einem automatisch gesteuerten variablen Verstärkungsfaktor.

10. Verfahren nach einem der vorhergehenden Ansprüche, mit folgendem Schritt:
zeitlich aufeinanderfolgendes Einschalten von Teilen des Empfängers, die in der Signalverarbeitungsrichtung stromabwärts voneinander angeordnet sind.

11. Verfahren nach einem der vorhergehenden Ansprüche, bei dem das Übertragen des Vollduplexsignals das Modulieren des Abfragefelds mit dem Vollduplexsignal umfasst.

12. Verfahren nach einem der vorhergehenden Ansprüche, wobei das Verfahren nach jedem Einschalten des Abfragefelds umfasst:
- Messen einer maximalen Amplitude des Abfragefelds, und/oder
- bevor ein Signal an den Empfänger (4) übertragen wird, Setzen mindestens einer Komponente des Empfängers (4) auf einen vorbestimmten Wert, und/oder
- nach einer ersten Warteperiode, Verbinden eines Detektors zum Detektieren eines Vollduplexcodes in dem Empfangssignal mit der Antenne zum Empfangen des zu empfangenden Signals, und/oder
- nach einer zweiten Warteperiode, Herausfiltern des empfangenen Vollduplexsignals aus dem empfangenen Signal, und/oder
- nach einer dritten Warteperiode, Verstärken des empfangenen Vollduplexsignals mit einem vorbestimmten Verstärkungsfaktor, und/ oder
- nach einer vierten Warteperiode, Verstärken des empfangenen Vollduplexsignals mit einem automatisch gesteuerten variablen Verstärkungsfaktor zum Kompensieren von Schwankungen in der Signalstärke des empfangenen Vollduplexsignals.

13. Verfahren nach Anspruch 12, bei dem die vierte Warteperiode länger ist als die dritte Warteperiode, die dritte Warteperiode länger ist als die zweite Warteperiode und die zweite Warteperiode länger ist als die erste Warteperiode, gezählt vom Einschalten des Abfragefelds.

14. Verfahren nach Anspruch 12 oder 13, bei dem der vorbestimmte Wert auf der Basis der gemessenen maximalen Amplitude des Abfragefelds gemessen wird.

15. Verfahren nach Anspruch 2 und 14, bei dem der vorbestimmte Wert auf der Basis der gemessenen maximalen Amplitude des Abfragefelds während der vorhergehenden ersten Periode bestimmt wird.

16. Verfahren nach Anspruch 2 und 9, bei dem der vorbestimmte Wert auf der Basis eines Werts des automatisch gesteuerten variablen Verstärkungsfaktors während der vorhergehenden ersten Periode bestimmt wird.

17. Verfahren nach mindestens Anspruch 2, bei dem die erste Periode eine Dauer von im Wesentlichen 50 ms hat.

18. Verfahren nach mindestens Anspruch 2, bei dem die zweite Periode eine Dauer von im Wesentlichen 3 oder 20 ms hat.

19. Verfahren nach Anspruch 12 oder 13, bei dem die ersten, zweiten, dritten und vierten Warteperioden jeweils ein ganzzahliges Mehrfaches eines vorbestimmten Zeitintervalls sind.

20. Verfahren nach Anspruch 19, bei dem die erste Warteperiode das Zweifache des vorbestimmten Zeitintervalls beträgt, die zweite Warteperiode das Dreifache des vorbestimmten Zeitintervalls beträgt, die dritte Warteperiode das Fünffache des vorbestimmten Zeitintervalls beträgt, und die vierte Warteperiode das Zehnfache des vorbestimmten Zeitintervalls beträgt, gezählt vom Moment des Einschaltens des Abfragefelds an.

21. Verfahren nach einem der vorhergehenden Ansprüche, wobei das Verfahren ferner umfasst:
Empfangen eines Halbduplexsignals, von z.B. einem Halbduplex-Responder, z.B. während der zweiten Periode.

22. Verfahren nach Anspruch 21, wobei das Verfahren ferner umfasst:
- Kombinierten von Daten in Bezug auf das empfangene Halbduplexsignal und von Daten in Bezug auf das empfangene Vollduplexsignal.

23. Verfahren nach einem der vorhergehenden Ansprüche, wobei das Verfahren ferner umfasst:
- Bestimmen eines ISO-Codes auf der Basis des empfangenen Halbduplexsignals und/oder des empfangenen Vollduplexsignals.

24. Verfahren nach mindestens Anspruch 2, zum Empfangen eines Vollduplexsignals mit Hilfe einer Sender-Empfänger-Vorrichtung (1), wobei die Sender-Empfänger-Vorrichtung einen Sender (2), einen Empfänger (4) und eine Antenne (6) aufweist, die mit dem Sender (2) und dem Empfänger (4) verbindbar ist, wobei der Empfänger mit einem Detektor (24) zum Detektieren eines zu empfangenden Signals versehen ist, wobei das Verfahren umfasst:
- Modulieren des Abfragefelds mit dem Vollduplexsignal, z.B. mittels eines Vollduplex-Responders, der in dem Abfragefeld platziert ist,
wobei das Verfahren ferner nach jedem Einschalten des Abfragefelds umfasst:
- Bestimmen einer maximalen Amplitude des modulierten Abfragefelds,
- Setzen mindestens einer Komponente des Empfängers (4) auf einen vorbestimmten Wert,
aufeinanderfolgend
- nach einer ersten Warteperiode, Verbinden des Detektors (24) mit der Antenne zum Empfangen des zu empfangenden Signals,
- nach einer zweiten Warteperiode, Einschalten eines Code-Filters (30) zum Herausfiltern des empfangenen Vollduplexsignals aus dem empfangenen Signal,
- nach einer dritten Warteperiode, Einschalten eines Verstärkers (32) des Empfängers zum Verstärken des empfangenen Vollduplexsignals mit einem vorbestimmten Verstärkungsfaktor,
- nach einer vierten Warteperiode, Einschalten einer automatischen Verstärkungsfaktorsteuervorrichtung (31) zum Steuern eines variablen Verstärkungsfaktors des Verstärkers zwecks Kompensierens von Schwankungen in der Signalstärke des empfangenen Vollduplexsignals, und danach
- Trennen des Detektors (24) von der Antenne (10), Ausschalten des Code-Filters (32), Ausschalten des Verstärkers (32) und Ausschalten der automatischen Verstärkungsfaktorsteuervorrichtung (31) des Verstärkers während der ersten und/oder der zweiten Periode.

25. Sender-Empfänger-Vorrichtung (1) zum Empfangen eines Vollduplexsignals, mit einem Sender (2) und einem Empfänger (4),
wobei der Sender (2) ein Abfragefeld erzeugt,
wobei der Empfänger (4) für den Empfang eines zu empfangenen Signals ausgebildet ist, welches das Vollduplexsignal enthält und das z.B. mittels eines in dem Abfragefeld platzierten Vollduplex-Responders als Antwort auf den Empfang des Abfragefelds gesendet wird,
wobei der Empfänger (4) mindestens eine Untervorrichtung für den Empfang des zu empfangenden Signals und/oder für das Verarbeiten des zu empfangenden Signals aufweist,
**dadurch gekennzeichnet, dass** der Empfänger (4) ferner mit Steuervorrichtungen versehen ist, die während einer Warteperiode nach dem Einschalten des Abfragefelds darauf warten, die mindestens eine Untervorrichtung einzuschalten.

26. Sender-Empfänger-Vorrichtung nach Anspruch 25, bei der der Sender (2) mit einer Regelvorrichtung (14) versehen ist, die ein von dem Sender (2) erzeugtes Abfragefeld in einem repetierenden Schaltzyklus betriebsmäßig ein- und ausschaltet, wobei der Sender, falls er eingeschaltet ist, das Abfragefeld erzeugt, und wobei die Steuervorrichtungen (18) derart ausgebildet sind, dass sie während des Schaltzyklus nach dem Einschalten des Abfragefelds während einer Warteperiode darauf warten, die mindestens eine Untervorrichtung einzuschalten, und während des Schaltzyklus die mindestens eine Untervorrichtung ausschalten.

27. Sender-Empfänger-Vorrichtung nach Anspruch 25 oder 26, bei der die Empfängervorrichtung aufweist:
einen Detektor (24) zum Detektieren eines Vollduplexcodes in dem empfangenen Signal, und
eine mit dem Detektor (24) verbindbare Antenne (6) zum Empfangen elektromagnetischer Strahlung, die das gesendete Vollduplexsignal aufweist, und wobei die mindestens eine Untervorrichtung (28,30,31, 32) eine Schaltvorrichtung (28) zum alternierenden Verbinden und Trennen des Detektors (24) und der Antenne (6) aufweist.

28. Sender-Empfänger-Vorrichtung nach einem der Ansprüche 25-27, bei der die mindestens eine Untervorrichtung einen Code-Filter (30) aufweist, um das Vollduplexsignal aus dem empfangenen Signal herauszufiltern.

29. Sender-Empfänger-Vorrichtung nach einem der Ansprüche 25-28, bei der die mindestens eine Untervorrichtung einen Verstärker (32) zum Verstärken des empfangenen Vollduplexsignals aufweist.

30. Sender-Empfänger-Vorrichtung nach Anspruch 29, bei der die mindestens eine Untervorrichtung (28,30,31,32) eine automatische Verstärkungsfaktorsteuervorrichtung (31) zum Steuern eines variablen Verstärkungsfaktors des Verstärkers (32) aufweist.

31. Sender-Empfänger-Vorrichtung nach einem der Ansprüche 25-30, bei der der Empfänger (4) mit Amplitudenbestimmungsvorrichtungen (22) zum Bestimmen einer maximalen Amplitude des zu empfangenden Signals versehen sind.

32. Sender-Empfänger-Vorrichtung nach einem der Ansprüche 25-31, bei der der Empfänger (4) mit Setzvorrichtungen (26) versehen ist, um eine Komponente des Empfängers auf einen vorbestimmten Wert zu setzen.

33. Sender-Empfänger-Vorrichtung nach mindestens Anspruch 26, bei der die Steuervorrichtungen (18) derart ausgebildet sind, dass sie jedes Mal nach dem Einschalten des Abfragefelds folgendes durchführen:
- Auslesen der Amplitudenbestimmungsvorrichtungen (22) zum Bestimmen der maximalen Amplitude des zu empfangenden Signals,
- Steuern der Setzvorrichtungen (26) zum Setzen einer Komponente des Empfängers (4) auf den vorbestimmten Wert, und, aufeinanderfolgend
- nach einer ersten Warteperiode, Steuern der Schaltvorrichtung (28) zum Verbinden des Detektors (14) mit der Antenne (6),
- nach einer zweiten Warteperiode, Einschalten des Code-Filters zum Herausfiltern des Vollduplexsignals aus dem empfangenen Signal,
- nach einer dritten Warteperiode, Einschalten des Verstärkers (32) des Empfängers (4) zum Verstärken des empfangenen Vollduplexsignals mit einem vorbestimmten Verstärkungsfaktor,
- nach einer vierten Warteperiode, Einschalten der automatischen Verstärkungsfaktorsteuervorrichtung (31) zum Steuern des variablen Verstärkungsfaktors des Verstärkers (2) zwecks Kompensierens von Schwankungen in der Signalstärke des empfangenen Vollduplexsignals,
wobei der Empfänger (4) ferner ausgelegt ist zum Steuern der Schaltvorrichtung (28) derart, dass ein Trennen des Detektors (24) von der Antenne (10) und ein Ausschalten des Code-Filters (32), des Verstärkers (32) und der automatischen Verstärkungsfaktorsteuervorrichtung (31) während jeder ersten und/oder zweiten Periode erfolgt.

34. System zum Empfangen von Vollduplexsignalen, mit einer Sender-Empfänger-Vorrichtung (1) nach einem der Ansprüche 25-33 und mit mindestens einem Vollduplex-Responder.

35. Computerprogramm-Produkt, ladbar in den Speicher eines Digitalcomputers, mit Software-Code-Teilen zum Ausführen der Schritte des Verfahrens gemäß einem der Ansprüche 1-24.

## Revendications

1. Procédé de réception d'un signal bidirectionnel simultané, comprenant les opérations suivantes :
- fournir un champ d'interrogation généré par un émetteur (2),
- transmettre le signal bidirectionnel simultané en réponse au champ d'interrogation, par exemple au moyen d'un répondeur bidirectionnel simultané placé dans le champ d'interrogation,
- dans lequel un récepteur (4) exécute au moins une étape de réception de signal, pour recevoir un signal à recevoir qui contient le signal bidirectionnel simultané, et exécute éventuellement au moins une étape de traitement du signal, pour traiter le signal reçu, **caractérisé par** l'étape suivante :
- démarrer ladite au moins une étape de réception de signal et/ou étape de traitement du signal après écoulement d'une période d'attente commençant à l'allumage du champ d'interrogation.

2. Procédé selon la revendication 1, dans lequel ladite fourniture du champ d'interrogation comprend l'opération suivante :
fournir un champ d'interrogation alterné dans un cycle de commutation répété, dans lequel, pendant une première période de chaque cycle de commutation, le champ d'interrogation est allumé et, pendant une deuxième période de chaque cycle de commutation, le champ d'interrogation est éteint, et
dans lequel ledit démarrage comprend l'opération suivante :
démarrer ladite au moins une étape de réception de signal et/ou étape de traitement du signal pendant le cycle de commutation après écoulement d'une période d'attente commençant à l'allumage du champ d'interrogation, et
le procédé comprenant en outre l'étape suivante :
- arrêter ladite au moins une étape de réception de signal et/ou étape de traitement du signal pendant le cycle de commutation.

3. Procédé selon l'une quelconque des revendications précédentes, dans lequel la durée de la période d'attente est choisie de façon à empêcher la perturbation de ladite au moins une étape de réception de signal et/ou étape de traitement du signal par l'allumage du champ d'interrogation.

4. Procédé selon l'une quelconque des revendications précédentes, dans lequel la durée de la période d'attente est prédéterminée.

5. Procédé selon l'une quelconque des revendications précédentes, dans lequel la durée de la période d'attente est au moins aussi longue que la durée d'une période de référence dans laquelle ou après laquelle une propriété du signal reçu satisfait un critère prédéterminé.

6. Procédé selon l'une quelconque des revendications précédentes, dans lequel la période d'attente est substantiellement au moins aussi longue qu'une période d'amortissement dans laquelle une réponse à l'allumage du champ d'interrogation s'amortit dans une première partie (28, 30, 31, 32) du récepteur (4) qui est en amont dans la direction de traitement du signal d'une deuxième partie du récepteur dans laquelle est exécutée ladite au moins une étape de réception de signal et/ou étape de traitement du signal.

7. Procédé selon l'une quelconque des revendications précédentes, dans lequel le récepteur (4) peut être connecté à une antenne (6) pour recevoir un rayonnement électromagnétique qui comprend le signal bidirectionnel simultané émis, et dans lequel l'étape de réception de signal comprend l'opération suivante :
- connecter de façon communicante le récepteur (4) avec l'antenne (6).

8. Procédé selon l'une quelconque des revendications précédentes, dans lequel l'étape de traitement du signal comprend les opérations suivantes :
- isoler par filtrage du signal reçu le signal bidirectionnel simultané reçu,
- amplifier le signal bidirectionnel simultané reçu par un facteur d'amplification prédéterminé, et/ou
- amplifier le signal bidirectionnel simultané reçu par un facteur d'amplification variable.

9. Procédé selon la revendication 8, comprenant le fait d'amplifier le signal bidirectionnel simultané reçu par un facteur d'amplification variable commandé de façon automatique.

10. Procédé selon l'une quelconque des revendications précédentes, comprenant l'opération suivants :
- allumer successivement dans le temps des parties du récepteur situées en aval les unes des autres dans la direction de traitement du signal.

11. Procédé selon l'une quelconque des revendications précédentes, dans lequel la transmission du signal bidirectionnel simultané comprend le fait de moduler le champ d'interrogation avec le signal bidirectionnel simultané.

12. Procédé selon l'une quelconque des revendications précédentes, dans lequel le procédé comprend, à chaque fois après l'allumage du champ d'interrogation, les opérations suivantes :
- mesurer une amplitude maximale du champ d'interrogation, et/ou
- avant qu'un signal ne soit fourni au récepteur (4), mettre au moins un composant du récepteur (4) à une valeur prédéterminée, et/ou
- après une première période d'attente, connecter un détecteur pour détecter un code bidirectionnel simultané dans le signal reçu avec l'antenne pour recevoir le signal à recevoir, et/ou
- après une deuxième période d'attente, isoler par filtrage du signal reçu le signal bidirectionnel simultané reçu, et/ou
- après une troisième période d'attente, amplifier le signal bidirectionnel simultané reçu par un facteur d'amplification prédéterminé, et/ou
- après une quatrième période d'attente, amplifier le signal bidirectionnel simultané reçu par un facteur d'amplification variable commandé de façon automatique pour compenser les variations d'une puissance de signal du signal bidirectionnel simultané reçu.

13. Procédé selon la revendication 12, dans lequel la quatrième période d'attente est plus longue que la troisième période d'attente, la troisième période d'attente est plus longue que la deuxième période d'attente et la deuxième période d'attente est plus longue que la première période d'attente, en comptant à partir de l'allumage du champ d'interrogation.

14. Procédé selon la revendication 12 ou 13, dans lequel la valeur prédéterminée est déterminée en se basant sur l'amplitude maximale mesurée du champ d'interrogation.

15. Procédé selon les revendications 2 et 14, dans lequel la valeur prédéterminée est déterminée en se basant sur l'amplitude maximale mesurée du champ d'interrogation au cours de la précédente première période.

16. Procédé selon les revendications 2 et 9, dans lequel le facteur d'amplification prédéterminé est déterminé en se basant sur une valeur du facteur d'amplification variable commandé de façon automatique au cours de la précédente première période.

17. Procédé selon au moins la revendication 2, dans lequel la première période a une durée de substantiellement 50 ms.

18. Procédé selon au moins la revendication 2, dans lequel la deuxième période a une durée de substantiellement 8 ou 20 ms.

19. Procédé selon la revendication 12 ou 13, dans lequel les première, deuxième, troisième et quatrième périodes d'attente sont chacune égales à un nombre entier de fois un intervalle de temps prédéterminé.

20. Procédé selon la revendication 19, dans lequel la première période d'attente est égale à deux fois l'intervalle de temps prédéterminé, la deuxième période d'attente est égale à trois fois l'intervalle de temps prédéterminé, la troisième période d'attente est égale à cinq fois l'intervalle de temps prédéterminé, et la quatrième période d'attente est égale à dix fois l'intervalle de temps prédéterminé, en comptant à partir du moment de l'allumage du champ d'interrogation.

21. Procédé selon l'une quelconque des revendications précédentes, dans lequel le procédé comprend en outre l'opération suivante :
- recevoir un signal bidirectionnel non simultané, provenant par exemple d'un répondeur bidirectionnel non simultané, par exemple pendant la deuxième période.

22. Procédé selon la revendication 21, dans lequel le procédé comprend en outre l'opération suivante :
- combiner des données concernant le signal bidirectionnel non simultané reçu et des données concernant le signal bidirectionnel simultané reçu.

23. Procédé selon l'une quelconque des revendications précédentes, dans lequel le procédé comprend en outre l'opération suivante :
- déterminer un code ISO en se basant sur le signal bidirectionnel non simultané reçu et/ou sur le signal bidirectionnel simultané reçu.

24. Procédé selon au moins la revendication 2, pour recevoir un signal bidirectionnel simultané à l'aide d'un appareil émetteur-récepteur (1), dans lequel l'émetteur-récepteur comprend un émetteur (2), un récepteur (4) et une antenne (6) pouvant être connectée à l'émetteur (2) et au récepteur (4), dans lequel le récepteur est pourvu d'un détecteur (24) pour détecter un signal à recevoir, dans lequel le procédé comprend l'opération suivante :
- moduler le champ d'interrogation avec le signal bidirectionnel simultané, par exemple au moyen d'un répondeur bidirectionnel simultané placé dans le champ d'interrogation,
dans lequel le procédé comprend en outre, à chaque fois après l'allumage du champ d'interrogation, les opérations suivantes :
- déterminer une amplitude maximale du champ d'interrogation modulé,
- mettre au moins un composant du récepteur (4) à une valeur prédéterminée,
successivement
- après une première période d'attente, connecter le détecteur (24) à l'antenne pour recevoir le signal à recevoir,
- après une deuxième période d'attente, allumer un filtre de code (30) pour isoler par filtrage du signal reçu le signal bidirectionnel simultané reçu,
- après une troisième période d'attente, allumer un amplificateur (32) du récepteur, pour amplifier le signal bidirectionnel simultané reçu par un facteur d'amplification prédéterminé, et
- après une quatrième période d'attente, allumer une commande de facteur d'amplification automatique (31) pour commander un facteur d'amplification variable de l'amplificateur pour compenser les variations de la puissance de signal du signal bidirectionnel simultané reçu, et après cela,
- déconnecter le détecteur (24) de l'antenne (10), éteindre le filtre de code (32), éteindre l'amplificateur (32) et éteindre la commande de facteur d'amplification automatique (31) de l'amplificateur pendant la première et/ou la deuxième période.

25. Appareil émetteur-récepteur (1) permettant de recevoir un signal bidirectionnel simultané, comprenant un émetteur (2) et un récepteur (4),
dans lequel l'émetteur (2) génère un champ d'interrogation, dans lequel le récepteur (4) est adapté pour recevoir un signal à recevoir qui contient le signal bidirectionnel simultané, par exemple émis par un répondeur bidirectionnel simultané placé dans le champ d'interrogation en réponse à la réception du champ d'interrogation,
dans lequel le récepteur (4) comprend au moins un dispositif secondaire pour recevoir le signal à recevoir et/ou traiter le signal reçu, **caractérisé en ce que** le récepteur (4) est en outre pourvu d'un moyen de commande qui attend pour allumer ledit au moins un dispositif secondaire pendant une période d'attente après l'allumage du champ d'interrogation.

26. Appareil émetteur-récepteur selon la revendication 25, dans lequel l'émetteur (2) est pourvu d'un dispositif de régulation (14) qui allume et éteint de façon fonctionnelle un champ d'interrogation généré par l'émetteur (2) dans un cycle de commutation répété, dans lequel l'émetteur, quand il est allumé, génère le champ d'interrogation et dans lequel le moyen de commande (18) est adapté pour, pendant le cycle de commutation, après l'allumage du champ d'interrogation, pendant une période d'attente, attendre pour allumer ledit au moins un dispositif secondaire et éteindre ledit au moins un dispositif secondaire pendant le cycle de commutation.

27. Appareil émetteur-récepteur selon la revendication 25 ou 26, dans lequel le dispositif récepteur comprend :
un détecteur (24) pour détecter un code bidirectionnel simultané dans le signal reçu et
une antenne (6) pouvant être connectée au détecteur (24) pour recevoir un rayonnement électromagnétique qui comprend le signal bidirectionnel simultané émis, et dans lequel ledit au moins un dispositif secondaire (28, 30, 32, 32) comprend un dispositif de commutation (28) pour connecter et déconnecter alternativement le détecteur (24) et l'antenne (6).

28. Appareil émetteur-récepteur selon l'une quelconque des revendications 25 à 27, dans lequel ledit au moins un dispositif secondaire comprend un filtre de code (30) pour isoler par filtrage du signal reçu le signal bidirectionnel simultané.

29. Appareil émetteur-récepteur selon l'une quelconque des revendications 25 à 28, dans lequel ledit au moins un dispositif secondaire comprend un amplificateur (32), pour amplifier le signal bidirectionnel simultané reçu.

30. Appareil émetteur-récepteur selon la revendication 29, dans lequel ledit au moins un dispositif secondaire (28, 30, 31, 32) comprend une commande de facteur d'amplification automatique (31) pour commander un facteur d'amplification variable de l'amplificateur (32).

31. Appareil émetteur-récepteur selon l'une quelconque des revendications 25 à 30, dans lequel le récepteur (4) est pourvu d'un moyen de détermination d'amplitude (22) pour déterminer une amplitude maximale du signal à recevoir.

32. Appareil émetteur-récepteur selon l'une quelconque des revendications 25 à 31, dans lequel le récepteur (4) est pourvu d'un moyen de réglage (26) pour mettre un composant du récepteur à une valeur prédéterminée.

33. Appareil émetteur-récepteur selon au moins la revendication 26, dans lequel le moyen de commande (18) est adapté pour, à chaque fois après l'allumage du champ d'interrogation :
- consulter le moyen de détermination d'amplitude (22) pour déterminer l'amplitude maximale du signal à recevoir,
- commander le moyen de réglage (26) pour mettre un composant du récepteur (4) à la valeur prédéterminée, et successivement
- après une première période d'attente, commander le dispositif de commutation (28) pour connecter le détecteur (14) à l'antenne (6),
- après une deuxième période d'attente, allumer le filtre de code pour isoler par filtrage du signal reçu le signal bidirectionnel simultané,
- après une troisième période d'attente, allumer l'amplificateur (32) du récepteur (4) pour amplifier le signal bidirectionnel simultané reçu par un facteur d'amplification prédéterminé,
- après une quatrième période d'attente, allumer la commande de facteur d'amplification automatique (31) pour commander le facteur d'amplification variable de l'amplificateur (2) pour compenser les variations de la puissance de signal du signal bidirectionnel simultané reçu,
dans lequel le récepteur (4) est en outre adapté pour, pendant chaque première et/ou deuxième période, commander le dispositif de commutation (28) pour déconnecter le détecteur (24) de l'antenne (16), et éteindre le filtre de code (30), l'amplificateur (2) et la commande de facteur d'amplification automatique (311).

34. Système permettant de recevoir des signaux bidirectionnels simultanés, comprenant un appareil émetteur-récepteur (1) selon l'une quelconque des revendications 25 à 33 et au moins un répondeur bidirectionnel simultané.

35. Produit de programme informatique, pouvant être chargé dans la mémoire d'un ordinateur numérique, comprenant des parties de code logiciel permettant d'exécuter les étapes du procédé selon l'une quelconque des revendications 1 à 24.
